# EUROPÄISCHE PATENTANMELDUNG

(11) **EP 4 575 255 A1**
(43) Veröffentlichungstag der Anmeldung: **25.06.2025**
(21) Anmeldenummer: 24219241.7
(22) Anmeldetag: 11.12.2024
(51) Int. Cl.: F16D 3/32

(54) **DOPPELGELENK ZUR VERBINDUNG ZWEIER GEGENEINANDER WINKELVERSTELLBARER WELLEN**

(30) Priorität: 18.12.2023 DE 102023005325
(71) Anmelder: Willi Elbe Gelenkwellen GmbH & Co. KG, 71732 Tamm (DE)
(72) Erfinder: Sedlmeier, Ralf, 74385 Pleidelsheim (DE); Hauhoff, Jörg, 72655 Altdorf (DE); Beuermann, Olaf, 70806 Kornwestheim (DE)
(74) Vertreter: Patentanwälte Jackisch-Kohl und Kohl

(57) **Zusammenfassung**

Das Doppelgelenk dient zur Verbindung zweier gegeneinander winkelverstellbarer Wellen und ist vorzugsweise für den Einsatz bei Lenkwellen von Fahrzeugen, insbesondere Kraftfahrzeugen, vorgesehen. Das Doppelgelenk hat zwei Gelenkgabeln (1, 2), an die jeweils ein Gelenkkreuz (5, 6) angeschlossen ist. Die Gelenkkreuze (5, 6) sind über eine Zentriereinheit (4) miteinander gekuppelt, die einen Zentrierzapfen (40) aufweist, der in eine Lagerkugel (35) eingreift, die in einem Lagerteil (34) sitzt. Das Lagerteil (34) ist schalenartig ausgebildet und umgibt die Lagerkugel (35) über mehr als deren halben Durchmesser. Das Lagerteil (34) liegt mit wenigstens einem Bereich (36) unter elastischer Verformung an der Lagerkugel (35) an. Die Lagerkugel (35) wird in das schalenartige Lagerteil (34) eingedrückt, bis die Lagerkugel (35) in das Lagerteil (34) eingeschnappt ist. Das Lagerteil (34) liegt unter Kraft an der Lagerkugel (35) an, so dass ein zusätzliches Druckelement nicht erforderlich ist.

## Beschreibung

Die Erfindung betrifft ein Doppelgelenk zur Verbindung zweier gegeneinander winkelverstellbarer Wellen nach dem Oberbegriff des Anspruches 1.

Doppelgelenke werden zur Verbindung von Antriebswellen mit winkelschiefen Zwischen- bzw. Abtriebswellen eingesetzt. Ein besonderes Anwendungsgebiet von Doppelgelenken sind Lenkwellen von Fahrzeugen, insbesondere von Kraftfahrzeugen. Die Doppelgelenke haben zwei Gelenkgabeln, in denen jeweils ein Gelenkkreuz schwenkbar gelagert ist. Die beiden Gelenkkreuze sind ihrerseits über eine Zentriereinheit miteinander verbunden, die eine Lagerkugel und einen Zentrierzapfen aufweist, der in der Lagerkugel liegt und relativ zu ihr verschoben und um seine Achse gedreht werden kann, je nach Teilwinkel zwischen den durch das Doppelgelenk miteinander verbundenen Wellen. Die Lagerkugel ihrerseits kann je nach Teilwinkel im Lagerring drehen. Die Lagerkugel wird durch ein federndes Druckstück gegen das Lagerteil gedrückt. Das Druckstück führt zu einer aufwändigen Montage der Zentriereinheit sowie zu einem aufwändigen Aufbau des Doppelgelenkes. Außerdem wird durch das Druckelement der Beugewinkel zwischen den winkelverstellbaren Wellen beeinträchtigt.

Der Erfindung liegt die Aufgabe zugrunde, das gattungsgemäße Doppelgelenk so auszubilden, dass es bei einfacher Montage und einfacher konstruktiver Gestaltung einen großen Beugewinkel ermöglicht.

Diese Aufgabe wird bei dem gattungsgemäßen Doppelgelenk erfindungsgemäß mit den kennzeichnenden Merkmalen des Anspruches 1 gelöst.

Das Lagerteil des erfindungsgemäßen Doppelgelenkes ist schalenartig ausgebildet und nimmt die Lagerkugel auf. Das Lagerteil ist hierbei so ausgebildet, dass es die Lagerkugel über mehr als deren halben Durchmesser umgibt. Dadurch ist sichergestellt, dass die Kugel nicht aus dem Lagerteil herausrutschen kann. Dabei ist das Lagerteil so gestaltet, dass es mit wenigstens einem Bereich unter elastischer Verformung an der Lagerkugel anliegt. Die elastische Verformung wird dadurch bewirkt, dass bei der Montage die Lagerkugel in das schalenartige Lagerteil eingedrückt wird. Hierbei erfolgt eine elastische Verformung des Lagerteiles, bis die Lagerkugel in das Lagerteil eingeschnappt ist. Dadurch liegt das Lagerteil unter Kraft an der Lagerkugel an, so dass ein zusätzliches Druckelement nicht erforderlich ist. Dadurch ergibt sich ein konstruktiv einfacher Aufbau, ohne die Wirkungsweise des Doppelgelenkes zu beinträchtigen. Insbesondere wird auf diese Weise eine sehr einfache Montage erreicht, da die Lagerkugel lediglich in das Lagerteil eingedrückt bzw. eingeschnappt werden muss. Da das Lagerteil selbst unter Kraft an der Lagerkugel anliegt, kann der Beugewinkel des Doppelgelenkes bzw. der mit den Doppelgabeln verbundenen Wellen in einfacher Weise vergrößert werden.

Bei einer vorteilhaften Ausbildung weist das Lagerteil einen zylindrischen Ring auf, der mit einer Eintrittsöffnung versehen ist, durch welche die Lagerkugel nach außen ragt. Der zylindrische Ring liegt unter Radialkraft an der Lagerkugel anliegt.

Im Bereich der Eintrittsöffnung ist der Innendurchmesser des zylindrischen Ringes kleiner als der Außendurchmesser der Lagekugel. Dies führt dazu, dass die Lagerkugel bei der Montage bzw. beim Einsetzen in das Lagerteil den zylindrischen Ring geringfügig elastisch aufweitet, bis die Lagerkugel in das Lagerteil eingeschnappt ist. Der zylindrische Ring übergreift in der Einbaulage die Lagerkugel, weil der zylindrische Ring die Lagerkugel über mehr als deren Durchmesser übergreift.

Bei einer bevorzugten Ausführungsform ist das Lagerteil in einem Lagerstück aufgenommen, das mit der einen Gelenkgabel verbunden ist.

Damit die Lagerkugel in einfacher und zuverlässiger Weise in das Lagerteil eingeschnappt werden kann, steht der Ring des Lagerteiles in vorteilhafter Weise über das Lagerstück vor. Dadurch lässt sich der Ring beim Einsetzen der Lagerkugel sicher elastisch verformen, um das Einschnappen der Lagerkugel in das Lagerteil zu ermöglichen.

Bei einer besonders einfachen Ausführungsform wird das Lagerteil durch ein Kunststoffteil gebildet, das ein vom Lagerstück getrenntes Bauteil ist. Dadurch kann das Lagerteil unabhängig vom Lagerstück im Hinblick auf seine Lagerfunktion für die Lagerkugel optimal gestaltet werden. Zum anderen lässt sich das Kunststoffteil in einfacher Weise nachträglich am Lagerstück befestigen. Alternativ kann das Kunststoffteil in das Lagerstück eingespritzt werden.

Hierzu ist das Lagerteil vorteilhaft mit einem Befestigungsteil versehen, mit dem das Lagerteil am Lagerstück gehalten wird.

Bei einer vorteilhaften Ausbildung hintergreift der Befestigungsteil den Rand einer Öffnung des Lagerstückes. Der Befestigungsteil ragt somit durch die Öffnung des Lagerstückes. Der Befestigungsteil kann zapfenartig ausgebildet und am freien Ende mit einer Verbreiterung versehen sein, die den Rand der Öffnung hintergreift.

Bevorzugt weist das Lagerteil eine Innenseite auf, die an ihrem vom Ring des Lagerteiles abgewandten Bereich Abstand von der Lagerkugel hat. Dieser Abstand verhindert, dass der Zentrierzapfen, der die Lagerkugel in der Einbaulage durchsetzt, mit dem Lagerteil in Berührung kommt und dadurch die Winkelverstellung der Gelenkgabeln bzw. der an sie angeschlossenen Wellen beeinträchtigen würde.

Für eine einfache Montage ist es von Vorteil, wenn das Lagerstück an einem Träger vorgesehen, vorzugsweise einstückig mit ihm ausgebildet ist, der an Schenkeln der einen Gelenkgabel befestigt ist. Der Träger lässt sich auf diese Weise einfach an der Gelenkgabel befestigen.

In vorteilhafter Weise ist auch der Zentrierzapfen an einem Träger vorgesehen, vorzugsweise einstückig mit ihm ausgebildet, der an Schenkeln der anderen Gelenkgabel befestigt ist. Über den Träger lässt sich somit auch der Zentrierzapfen einfach mit der Gelenkgabel verbinden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

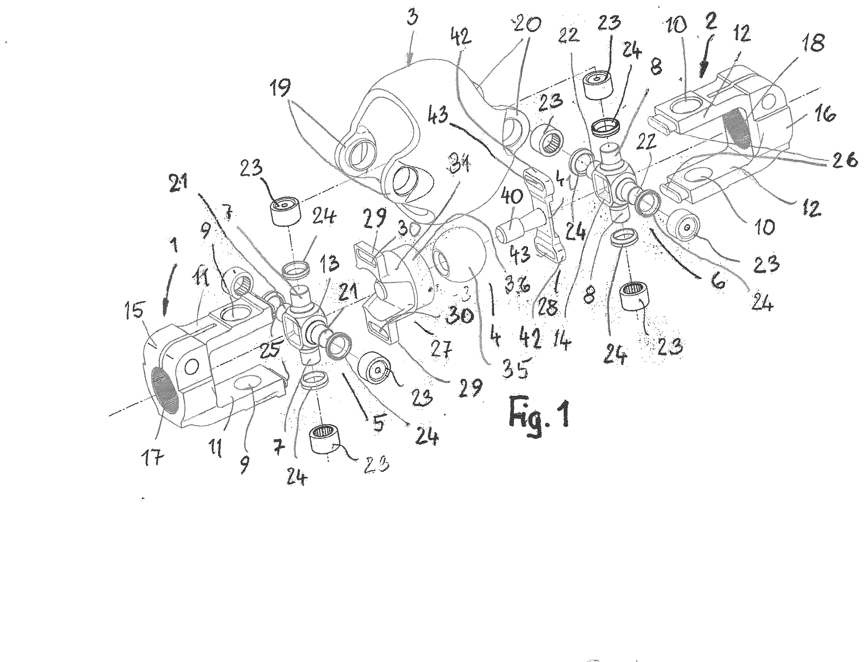

Die Erfindung wird anhand eines in den Zeichnungen dargestellten Ausführungsbeispieles näher erläutert. Es zeigen
- Fig. 1: in Explosivdarstellung ein erfindungsgemäßes Doppelgelenk zur Verbindung zweier gegeneinander winkelverstellbarer Wellen,
- Fig. 2: einen Schnitt durch das Doppelgelenk mit fluchtend zueinander liegenden Wellen,
- Fig. 3: in einer Darstellung entsprechend Fig. 2 das Doppelgelenk mit zwei winklig zueinander liegenden Wellen,
- Fig. 4: in perspektivischer Darstellung das Doppelgelenk in einer Stellung gemäß Fig. 3,
- Fig. 5: in perspektivischer Darstellung einen Teil einer Zentriereinheit des erfindungsgemäßen Doppelgelenkes.

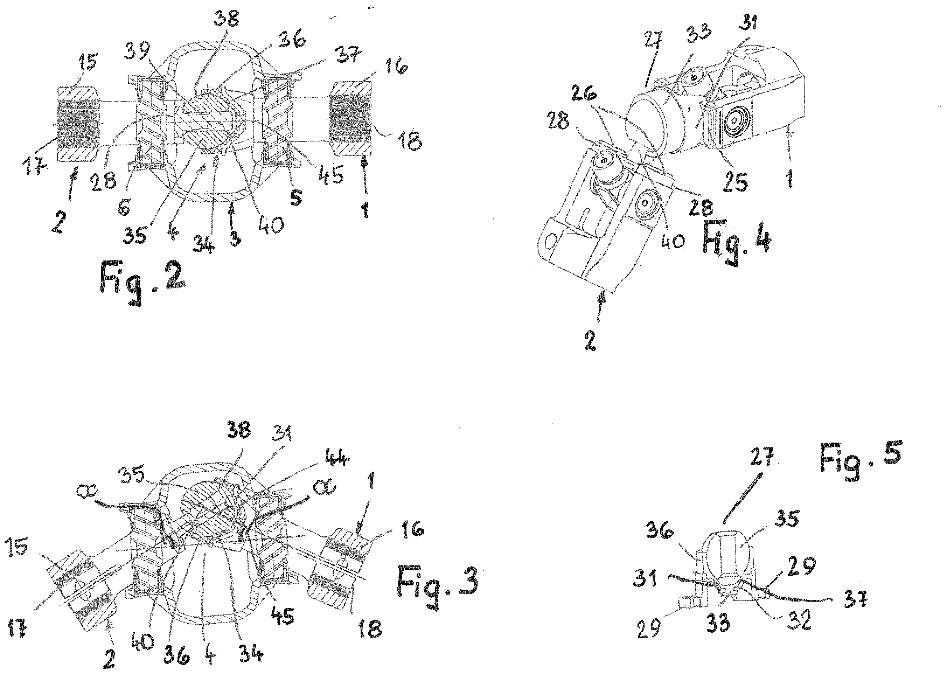

Das Doppelgelenk ist Teil einer Lenksäule, die zwischen einem Lenkrad und einem Lenkgetriebe eines Fahrzeuges, vorzugsweise eines Kraftfahrzeuges, angeordnet ist. Das Doppelgelenk hat zwei Gelenkgabeln 1, 2 von denen die Gelenkgabel 2 mit einer (nicht dargestellten) Lenkstange der Lenksäule fest verbunden ist. An die Gelenkgabel 1 wird eine (nicht dargestellte) Welle angeschlossen. Diese Welle sowie die Lenkstange der Lenksäule können gegeneinander winkelversetzt verstellt werden, wie beispielhaft aus den Fig. 3 und 4 hervorgeht.

Zwischen den beiden Gelenkgabeln 1, 2 befindet sich ein etwa kugelförmiges Mittelstück 3, das eine Zentriereinheit 4 umgibt (Fig. 2). Mit der Zentriereinheit 4 werden Gelenkkreuze 5 und 6 gelenkig miteinander verbunden. Sie haben jeweils eine Schwenkachse 7, 8, die in Öffnungen 9, 10 von Schenkeln 11, 12 der Gelenkgabeln 1, 2 drehbar gelagert sind. Die Schwenkachsen 7, 8 werden durch fluchtend zueinander liegende Achsen gebildet, die von einem Grundkörper 13, 14 der Gelenkkreuze 5, 6 abstehen.

Die Gelenkgabeln 1, 2 sind u-förmig ausgebildet und haben die beiden Schenkel 11, 12, die von einem Grundkörper 15, 16 abstehen. Er hat eine Durchgangsöffnung 17, 18, die mit einer axialen Profilierung versehen ist, die mit einer entsprechenden Gegenprofilierung der in die Durchgangsöffnung 17, 18 eingesetzten Welle für eine drehfeste Verbindung zusammenwirkt.

Die Gelenkkreuze 5, 6 sind in Lageraugen 19, 20 schwenkbar gelagert, die vom Mittelstück 3 auf einander gegenüberliegenden Seiten vorstehen.

Die Gelenkkreuze 5, 6 greifen mit Zapfen 21, 22 in die Lageraugen 19, 20 ein. Die Zapfen 21, 22 erstrecken sich senkrecht zu den Zapfen 7, 8 und stehen vom Grundkörper 13, 14 der Gelenkkreuze 5, 6 ab. Die Achsen der Zapfen 5, 6, 21, 22 liegen in einer gemeinsamen Ebene.

Auf den Zapfen 5, 6, 21, 22 sitzen jeweils Wälzlager 23, vorzugsweise Rollenlager, die in den Öffnungen 9, 10 der Gelenkgabeln 1, 2 und den Lageraugen 19, 20 des Mittelstückes 3 befestigt sind. Die Wälzlager 23 stellen sicher, dass die Gelenkkreuze 5, 6 relativ zu den Gelenkgabeln 1, 2 und zum Mittelstück 3 leicht drehen können.

Vorzugsweise liegen die Wälzlager 23 über Dichtringe 24 am Grundkörper 13, 14 der Gelenkkreuze 5, 6 an. Die Dichtringe 24 verhindern einen Staubeintritt sowie einen Fettaustritt am Wälzlager 23.

Die Lageraugen 19, 20 sind vorteilhaft einstückig mit dem Mittelstück 3 ausgebildet. Die Lageraugen 19, 20 liegen beiderseits der Gelenkgabeln 1, 2.

Aufgrund der Zentriereinheit 4 ist das Doppelgelenk selbstzentrierend ausgebildet. Die Zentriereinheit 4 gewährleistet, dass die beiden Gelenkgabeln 1, 2 jeweils um denselben Beugewinkel α (Fig. 3) ausgelenkt werden. Der Beugewinkel α kann bis zu etwa 60° betragen.

Die Schenkel 11, 12 der Gelenkgabeln 1, 2 weisen stirnseitig jeweils einen Vorsprung 25, 26 auf, die Formschlussteile bilden, mit deren Hilfe an der Stirnseite der Schenkel 11, 12 Träger 27, 28 befestigt werden.

Der Träger 27 hat zwei von einem Grundkörper quer abstehende Laschen 29, die jeweils mit einer Öffnung 30 versehen sind. Durch die Öffnungen 30 ragen die Vorsprünge 25 der Gelenkgabel 1. Die Öffnungen 30 und die Vorsprünge 25 sind so ausgebildet, dass der Träger 27 durch Rastung an der Stirnseite der Schenkel 11 der Gelenkgabel 1 gehalten ist.

Die beiden Laschen 29 stehen von einem Lagerstück 31 ab, mit dem die Laschen 29, 30 vorteilhaft einstückig ausgebildet sind. Das Lagerstück 31 ist kalottenförmig ausgebildet und weist zentrisch eine Öffnung 32 auf (Fig. 5), durch die ein Zapfen 33 ragt, der an der Außenseite eines kalotten- bzw. schalenförmigen Lagerteiles 34 vorgesehen ist. Es besteht aus Kunststoff und ist zusammen mit dem Zapfen 33 einstückig ausgebildet.

Das Lagerteil 34 besteht aus einem solchen Kunststoff, dass ein Einschnappen einer Lagerkugel 35 in noch zu beschreibender Weise ermöglicht wird.

Das Lagerteil 34 liegt an der Innenwand des Lagerstückes 31 an und steht axial über dieses vor. Dieser überstehende Teil des Lagerteil 34 bildet einen zylindrischen Ring 36, an den ein teilkalottenförmiger Lagerabschnitt 37 anschließt.

Die Innenseite des Ringes 36 und des Lagerabschnittes 37 ist etwa teilkugelförmig ausgebildet und liegt flächig an der Lagerkugel 35 über nahezu dessen gesamte Oberseite an.

Wie Fig. 2 zeigt, ist der zylindrische Ring 36 mit seiner gekrümmten Innenseite 38 so vorgesehen, dass das Lagerteil 34 die Lagerkugel 35 über mehr als den halben Umfang umgreift. Dadurch muss die Lagerkugel 35 in das Lagerteil 34 eingeschnappt werden, wobei der Ring 36 geringfügig elastisch aufgeweitet wird. In der Einbaulage liegt dann der Ring 36 unter elastischer Verformung an der Lagerkugel 35 an und verhindert, dass diese aus dem Lagerteil 34 herausrutschen kann.

Die Lagerkugel 35 hat eine zentrale Durchgangsöffnung 39, in die ein Zapfen 40 ragt, der am Träger 28 vorgesehen, vorzugsweise einstückig mit ihm ausgebildet ist.

Der Träger 28 hat ein flaches, beispielhaft rechteckiges Mittelteil 41, von dem mittig der Zapfen 40 senkrecht absteht. An den beiden Schmalseiten des Mittelteiles 41 sind Laschen 42 vorgesehen, die jeweils mit einer Öffnung 43 versehen sind. Der Träger 28 wird mit seinen Laschen 42 auf die Vorsprünge 26 der Gelenkgabel 2 stirnseitig aufgesteckt. Die Vorsprünge 26 ragen durch die Öffnungen 43. Die Vorsprünge 26 sind - wie die Vorsprünge 25 der Gelenkgabel 1 - so ausgebildet, dass der Träger 28 rastend auf den Vorsprüngen 26 sitzt. Dadurch wird der Träger 28, der an den Stirnseiten der Schenkel 12 der Gelenkgabel 2 anliegt, sicher gehalten.

Der Zapfen 40 ragt in die Durchgangsöffnung 39 der Lagerkugel 35 und ist bei den Auslenkungen der an die Gelenkgabeln 1, 2 angeschlossenen Wellen relativ zur Lagerkugel 35 verschiebbar und auch verdrehbar.

Die Lagerkugel 35 ihrerseits ist im Lagerteil 34 drehbar gelagert. Der zylindrische Ring 36 sorgt dafür, dass die Lagerkugel 35 nicht aus ihrer Einbaulage im Lagerteil 34 herausrutschen kann. Da sich der zylindrische Ring 36 über den Durchmesser der Lagerkugel 35 hinaus erstreckt und die Innenseite des Ringes 36 über die gesamte axiale Bereite des Ringes sowie über dessen Umfang an der Lagerkugel 35 anliegt, wird die Lagerkugel 35 bei den Schwenkbewegungen der Wellen im Aufnahmeelement 34 gedreht.

Fig. 2 zeigt eine Situation, bei der die mit den Gelenkgabeln 1, 2 verbundenen (nicht dargestellten) Wellen fluchtend zueinander liegen. Der Zapfen 40 ist in dieser Lage so weit durch die Lagerkugel 35 gesteckt, dass er aus deren Durchgangsöffnung 39 vorsteht. Das Aufnahmeelement 34 ist so ausgebildet und im Lagerstück 31 angeordnet, dass der Zapfen 40 in der gestreckten Lage gemäß Fig. 2 nicht mit dem Lagerteil 34 in Berührung kommt.

Das Lagerstück 31 hat einen an die Innenseite 38 des Ringes 36 anschließenden Innenseitenabschnitt 44, der im Radialschnitt gemäß Fig. 3 auf einem Kegelmantel liegt. Dies hat zur Folge, dass die Lagerkugel 35 nicht an diesem Innenseitenabschnitt 44 anliegt. Er weist mittig einen ebenen Abschnitt 45 auf, an dessen Außenseite mittig der Zapfen 33 zur Befestigung des Lagerabschnittes 37 am Lagerstück 31 vorgesehen ist.

Aufgrund des ebenen Innenseitenabschnittes 45 wird in einfacher Weise erreicht, dass der Zapfen 40 des Trägers 28 bei fluchtenden Wellen Abstand vom Lagerteil 34 hat.

Erfolgt eine Schwenkbewegung der Gelenkgabeln 1, 2 relativ zueinander (Fig. 3), wird die Lagerkugel 35 im Lagerteil 34 gedreht, wobei gleichzeitig der Zapfen 40 in der Durchgangsöffnung 39 der Lagerkugel 35 verschoben und gegebenenfalls um seine Achse gedreht wird.

Die Zentriereinheit 4 ist konstruktiv sehr einfach ausgebildet. Zur Halterung der Lagerkugel 35 im Lagerteil 34 ist kein zusätzliches Sicherungsteil erforderlich. Die Lagerkugel 35 wird bei ihrem Einbau lediglich in das Lagerteil 34 eingeschnappt. Da sich der Ring 36 des Lagerteiles 34 über den Durchmesser der Lagerkugel 35 hinaus erstreckt (Fig. 2), wird der Ring 36 beim Einschnappen der Lagerkugel 35 elastisch aufgeweitet, bis die in Fig. 2 dargestellte Einbaulage erreicht ist. In dieser Lage liegt der Ring 36 des Lagerteiles 34 unter elastischer Verformung am Umfang der Lagerkugel 35 an. Die Elastizität des Ringes 36 gewährleistet darüber hinaus in einfacher Weise eine Spielfreiheit zwischen der Lagerkugel 35 und dem Lagerteil 34.

Da das Lagerteil 34 nicht nur zur Lagerung der Lagerkugel 35 dient, sondern diese auch durch den beschriebenen Schnappeffekt in der Lage sichert und der Ring 36 unter elastischer Verformung an der Lagerkugel 35 anliegt, kann der Beugewinkel α trotz kompakter Gestaltung der Zentriereinheit 4 sehr groß sein und bis zu 60° betragen.

Besonders vorteilhaft ist die beschriebene Gestaltung der Zentriereinheit 4, weil die beiden Gelenkgabeln 1, 2 und damit die an sie angeschlossenen (nicht dargestellten) Wellen in eine gestreckte Lage entsprechend Fig. 2 gebracht werden können.

## Patentansprüche

1. Doppelgelenk zur Verbindung zweier gegeneinander winkelverstellbarer Wellen, vorzugsweise für den Einsatz bei Lenkwellen von Fahrzeugen, insbesondere Kraftfahrzeugen, mit zwei Gelenkgabeln (1,2), an die jeweils ein Gelenkkreuz (5, 6) angeschlossen ist, und mit einer Zentriereinheit (4), über welche die Gelenkkreuze (5, 6) miteinander gekuppelt sind und die einen Zentrierzapfen (40) aufweist, der in eine Lagerkugel (35) eingreift, die in einem Lagerteil (34) sitzt,
**dadurch gekennzeichnet, dass** das Lagerteil (34) schalenartig ausgebildet ist, die Lagerkugel (35) über mehr als deren halben Durchmesser umgibt und mit wenigstens einem Bereich (36) unter elastischer Verformung an der Lagerkugel (35) anliegt.

2. Doppelgelenk nach Anspruch 1,
**dadurch gekennzeichnet, dass** das Lagerteil (34) einen zylindrischen Ring (36) aufweist, der mit einer Eintrittsöffnung versehen ist, durch welche die Lagerkugel (35) nach außen ragt, und der unter Radialkraft an der Lagerkugel (35) anliegt.

3. Doppelgelenk nach Anspruch 1 oder 2,
**dadurch gekennzeichnet, dass** das Lagerteil (34) in einem Lagerstück (31) aufgenommen ist, das mit der einen Gelenkgabel (1) verbunden ist.

4. Doppelgelenk nach Anspruch 2 oder 3,
**dadurch gekennzeichnet, dass** der Ring (36) des Lagerteiles (34) über das Lagerstück (31) vorsteht.

5. Doppelgelenk nach einem der Ansprüche 1 bis 4,
**dadurch gekennzeichnet, dass** das Lagerteil (34) ein Kunststoffteil ist, das ein vom Lagerstück (31) getrenntes Bauteil ist.

6. Doppelgelenk nach einem der Ansprüche 1 bis 5,
**dadurch gekennzeichnet, dass** das Lagerteil (34) einen Befestigungsteil (33) aufweist, mit dem das Lagerteil (34) am Lagerstück (31) gehalten ist.

7. Doppelgelenk nach Anspruch 6,
**dadurch gekennzeichnet, dass** der Befestigungsteil (33) den Rand einer Öffnung (32) des Lagerstückes (31) hintergreift.

8. Doppelgelenk nach einem der Ansprüche 1 bis 7,
**dadurch gekennzeichnet, dass** das Lagerteil (34) eine Innenseite (38, 44, 45) aufweist, die an ihrem vom Ring (36) des Lagerteiles (34) abgewandten Bereich Abstand von der Lagerkugel (34) hat.

9. Doppelgelenk nach einem der Ansprüche 1 bis 8,
**dadurch gekennzeichnet, dass** das Lagerstück (31) an einem Träger (27) vorgesehen, vorzugsweise einstückig mit ihm ausgebildet ist, der an Schenkeln (11) der einen Gelenkgabel (1) befestigt ist.

10. Doppelgelenk nach einem der Ansprüche 1 bis 9,
**dadurch gekennzeichnet, dass** der Zentrierzapfen (40) an einem Träger (28) vorgesehen, vorzugsweise einstückig mit ihm ausgebildet ist, der an Schenkeln (12) der anderen Gelenkgabel (2) befestigt ist.
